# EUROPEAN PATENT APPLICATION

(11) **EP 4 190 943 A1**
(43) Date of publication of application: **07.06.2023**
(21) Application number: 21212606.4
(22) Date of filing: 06.12.2021
(51) Int. Cl.: C25B 1/04, C25B 1/30, C25B 9/23, C25B 11/032, C02F 1/461, C02F 1/467

(54) **IMPROVED ELECTROCHEMICAL CELL FOR OXYGEN REDUCTION TO HYDROGEN PEROXIDE**

(71) Applicant: Hpnow APS, 2200 Copenhagen (DK)
(72) Inventor: Sathyadev Rajmohan, Rajath, 2610 Rødovre (DK); Frydendal, Rasmus, 2700 Brønshøj (DK); Arnau, VERDAGUER CASADEVALL, 2400 København (DK); Gottesfeld, Ziv, 6249807 Tel Aviv (IL)
(74) Representative: Stütz, Jan

(57) **Abstract**

This invention presents a new approach for an electrochemical cell design that is tailored to the synthesis of hydrogen peroxide from electrochemical oxygen reduction reaction. In this invention, we disclose the use of a porous electrically conductive layer that simultaneously provides uniform oxygen gas flow and electrical conductivity to the cathode of a hydrogen peroxide producing electrochemical cell. Water is set to flow through the cathode gas diffusion layer, which helps in the removal of hydrogen peroxide from the electrode.

## Description

Hydrogen peroxide (H₂O₂) is a very versatile chemical, used as an oxidant in industries such as pulp and paper, water treatment and agriculture. The on-site production of hydrogen peroxide from readily available compounds is highly attractive for these industries, as it would enable supply independence and be more sustainable. Electrolysis cells offer unique advantages in generating chemicals in decentralized facilities with the use of electricity as input energy rather than requiring large chemical production plants. Advantages are, among others, generation of chemicals where and when they are needed, thereby removing the need for transportation and storage, and facilitating use of energy produced by sustainable means such as wind power and solar.

Electrochemical production of hydrogen peroxide has strong advantages over the traditional Anthraquinone process that takes place in centralized chemical facilities. The Anthraquinone process involves a large amount of energy, CO₂ emissions and chemical waste, and since production is centralized, hydrogen peroxide needs to be transported to the point of use. For economic reasons, hydrogen peroxide is shipped at concentrations typically between 30 and 70 %, which is hazardous and poses safety concerns. Once it reaches the point of use, it often needs to be diluted to concentrations < 3 %.

Electrochemical production can take place using water and oxygen from the atmosphere to form H₂O₂ and only electricity is required as energy input, meaning that it can be a CO₂ emissions-free process when using CO₂-neutral electricity. These concerns are directly addressed by producing the chemical on-site. Furthermore, in many applications, low concentrations (below 3 wt%) are needed which means safety concerns can be avoided altogether if the solutions produced are kept low from the beginning.

### Background of the invention:

The electrochemical production of hydrogen peroxide typically relies on selective oxygen reduction. There have traditionally been two main pathways to produce hydrogen peroxide electrochemically depending on the form of ion conductor used. The first approach has been to use liquid state ion conductors, usually in the form of an alkaline or neutral salt solution (see Direct and Continuous Production of Hydrogen Peroxide with 93% Selectivity Using a Fuel-Cell System, Angewandte Chemie 2003). This has usually led to high efficiency and concentrations for hydrogen peroxide production, but purity is low since it is hard to separate the salts from the generated hydrogen peroxide. The second approach has been to use a solid state ion conductor, such as a polymer cation exchange membrane, which results in higher purities, but achievable concentrations and efficiencies are usually lower (see Neutral H2O2 Synthesis by Electrolysis of Water and O2, Angewandte Chemie 2008).

The present invention is focused on the second approach, whereby a polymer cation exchange membrane is used in combination with a cathode and anode electrode that are in intimate contact with the membrane, forming a single mechanical entity that is known as membrane electrode assembly.

Prior art based in membrane electrode assemblies has typically struggled to achieve sufficiently high throughputs, which has a direct impact on size of the electrodes required and in turn cost. The main reason for that is difficulty in simultaneously achieving the three required conditions for electrochemical hydrogen peroxide production: delivering oxygen uniformly across the cathode electrode, collecting current uniformly from the cathode electrode, and at the same time efficiently extracting hydrogen peroxide from the cathode catalyst layer. Approaches in prior art have focused in operating with:
a) Gas-phase oxygen - which has suitable oxygen transport to the electrodes, leading to high current densities, but suffers from difficulties in extracting hydrogen peroxide from the electrodes, which leads to poor faradaic efficiencies. This means that overall throughputs are low.
b) Dissolved oxygen in water - water helps extract hydrogen peroxide, which results in high faradaic efficiencies, but on the other hand the low solubility of oxygen in water means current densities are low. Overall throughputs of hydrogen peroxide are low.

To overcome this issue of low throughput, approaches in the literature have focused in designing electrochemical cells that operate in mixed phases of gas and liquid (US patent application 2014/0131217 A1, US patent 5,972,196, EP 3,430,182).

These approaches involve applying gas in selected spots of the cathode via bubblers or fluidizing media, while keeping the rest or even all of the cathode immersed in water. Generally, in these designs there are areas of the electrode dedicated to current collection, other areas dedicated to gas delivery, and yet other areas dedicated to hydrogen peroxide extraction. Accordingly, while such mixed phase operation has brought some improvements in the form of higher faradaic efficiencies and throughputs, it presents challenges in effective and uniform current collection, gas application, product flow, and does not efficiently utilize the full area of the cathode, leading to sub-optimal performance and exacerbating degradation.

In the present invention we disclose a design for an electrochemical cell for the production of hydrogen peroxide that improves current collection and gas delivery, while at the same time facilitating hydrogen peroxide extraction from the cathode through a forced water flow. This optimizes utilization of the available electrode area, which results in higher throughputs, faradaic efficiencies and electrode lifetime.

### Detailed description of the invention:

The key innovation disclosed in this invention is in incorporating an electrically conductive porous gas transport layer that simultaneously collects current from the cathode, and uniformly delivers oxygen gas to the cathode, while at the same time having water present in the cathode gas diffusion layer. These improvements maximize the electrode surface utilized for hydrogen peroxide generation, and facilitate extraction of the generated hydrogen peroxide, resulting in improved performance compared to prior art.

Electrochemical synthesis of hydrogen peroxide typically takes place in an electrochemical cell with oxygen reduction to hydrogen peroxide at the cathode, and water oxidation at the anode, according to the below chemical reactions:

Anode: 2*H*₂*O* → *O*₂ + 4*H*⁺ + 4*e⁻*

Cathode: 2*O*₂ + 4*H*⁺ + 4*e⁻* → 2*H*₂*O*₂

Alternative anode reactions include water oxidation to hydrogen peroxide or ozone, hydrogen oxidation or oxidation of alcohols.

Such a cell enables the generation of hydrogen peroxide at the point of use, using only readily available substances such as oxygen (from the air), and water. Other oxygen sources include oxygen generated on site (for example through a pressure swing adsorption system), and oxygen gas cylinders. This has numerous advantages over purchasing bulk hydrogen peroxide, including supply security, CO₂ neutrality and safety.

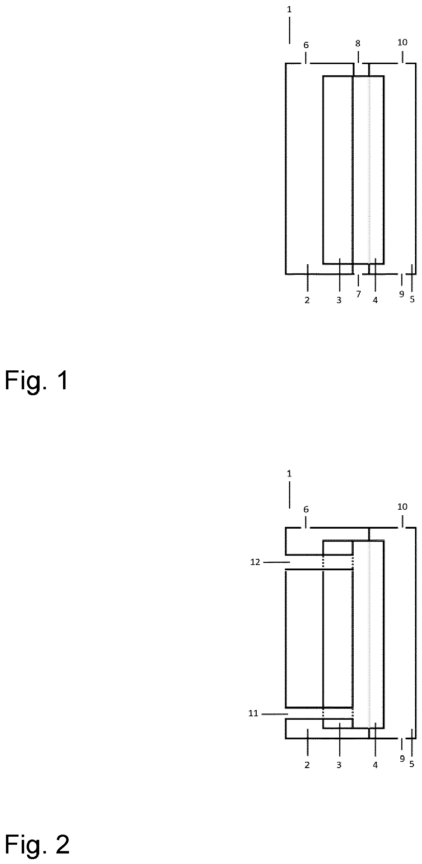

The electrochemical cell consists of several components, as shown in Figures 1 and 2.

The membrane electrode assembly is the core of the electrochemical cell, and contains the electrodes where the electrochemical reactions take place. The membrane electrode assembly is formed of an anode a cation exchange membrane, and a cathode that are in intimate contact with each other (Handbook of Fuel Cells: Fundamentals, Technology and Applications, Wiley VCH, 2014). Differently from other inventions (for example WO2021160759A1), there is no porous ionically conductive layer between membrane and cathode.

The anode acts as a proton source for the cathode, and while water is the most common reactant, other proton sources such as alcohols (methanol, ethanol...) or molecular hydrogen could be used without affecting the nature of the invention. If other proton sources are used the overall cell reaction and half-cell reaction are accordingly modified.

Anodes for water oxidation to oxygen are well-known to those versed in the art. These typically consist of iridium oxide nanoparticles deposited directly on a polymer exchange membrane or a current collector, forming the anode catalyst layer. The polymer exchange membrane needs to be proton conducting, and common types include Nafion. The thickness of the membrane is between 10 µm to 500 µm. The current collector is usually a Titanium layer or a Titanium felt, which thickness ranging from 50 µm to 3000 µm. It should have some porosity to allow an escape path for oxygen gas generated at the anode catalyst layer. The sintered Titanium layer or Titanium felt can also be coated with other materials such as Platinum or Gold to improve electrical contact. Iridium oxide nanoparticles can be combined or replaced with ruthenium oxide, platinum and other metals. Deposition of the nanoparticles can take place via spray coating, tape casting and other suitable methods, and it can take place directly at the polymer exchange membrane, forming a catalyst coated membrane (CCM) or at the current collector, forming a GDE. Following the deposition step, polymer exchange membrane and sintered Titanium layer or Titanium felt can be attached to each other in a manner that the anode catalyst layer is located in between. The attachment can be mediated by the application of ionomer solution, and the application of heat and/or pressure.

The cathode reduces oxygen into hydrogen peroxide. Oxygen could come from air, an oxygen concentrator or from a bottle of compressed gas.

Cathodes consist of a cathode catalyst layer and a cathode gas diffusion layer that are in intimate contact with each other. The gas diffusion layer is porous and made of an electrically conducting material to enable transport of oxygen, water and hydrogen peroxide to/from the cathode catalyst layer. Usually the gas diffusion layer is made of carbon cloth or fibers. Other suitable gas diffusion layers include metallic foams or meshes, for example made of Titanium or other metals. The gas diffusion layer can be coated with PTFE or other materials to modify its properties on either or both sides.

The catalyst layer contains the catalyst where the electrochemical reaction takes place, and it is placed between the gas diffusion layer and the polymer exchange membrane. Typically, a catalyst ink is deposited onto the cathode gas diffusion layer, forming what is known as a gas diffusion electrode. The catalyst ink contains ionomer and a suitable catalyst, mixed with a suitable solvent. Typical solvents include alcohols and/or water. Suitable cathode catalysts should be selective towards oxygen reduction to hydrogen peroxide, and include Pt-Hg, Pd-Hg, Cu-Hg, Ag-Hg, Ag, Au, carbon, graphene, nitrogen doped carbon, Sulphur doped carbon, Cobalt porphyrins and phthalocyanines, transition metal sulfides and nitrides and any combinations thereof. Typically catalyst materials should be in a nanoparticle form in order to increase surface area and facilitate deposition procedures.

Alternatively, catalyst ink could be sprayed directly on the polymer exchange membrane, forming a catalyst coated membrane, with the gas diffusion layer added afterwards. It is also possible to combine both a catalyst coated membrane and a gas diffusion electrode.

The cathode is placed with its catalyst layer facing the polymer exchange membrane, and typically the application of heat and pressure ensures cathode and membrane are physically attached. This is often done together with the application of heat and pressure for the anode side. Typical values for temperature and pressure are 80-130 C, and 20-2000 kg/cm², which are usually maintained from 2 to 20 minutes. The anode current collector can also be pressed on the opposite side of the membrane for a single-step pressing.

This results in a single mechanical entity containing cathode and anode electrode, as well as polymer exchange membrane, which is known as a membrane-electrode assembly (MEA)

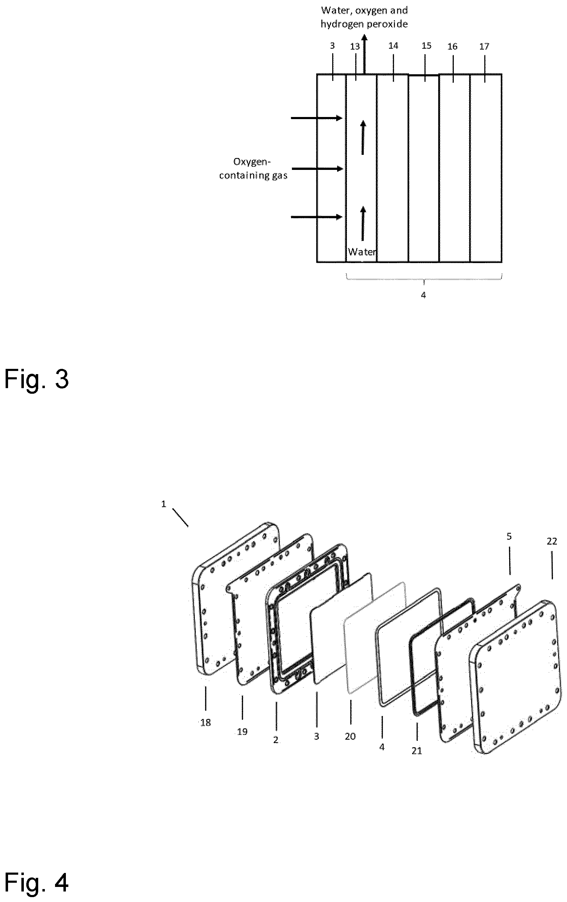

The MEA is mechanically assembled in an electrochemical cell, which provides the right environment in terms of current collection, gas and water delivery and peroxide extraction. The MEA components and the electrically conductive porous gas transport layer as assembled are shown in Figure 3. The electrochemical cell in this invention consists of several parts:

An electrically conductive porous gas transport layer, which is placed in intimate contact with the cathode side of the MEA, and serves the dual purpose of both providing a uniform flow of oxygen-containing gas throughout its surface, as well as serving as a current collector. The electrically conductive porous gas transport layer should be made of aluminum, titanium, graphite or other metals or post-transition metals. In order to provide a uniform gas flow, porosity of the plate should be adapted to overall gas flow and gas pressure. Preferred pressure drop across the electrically conductive porous gas transport layer is of at least 1 mbar, and preferably above 20 mbar, and even more preferably above 30 mbar. Typical thicknesses of the electrically conductive porous gas transport layer are between 0.5 and 10 mm, preferably between 1 and 5 mm and even more preferably between 1 and 3 mm. Pore size of the electrically conductive porous gas transport layer is between 0.1 and 100 um, preferably between 0.13 and 10 um, and even more preferably between 0.2 and 5 um. The electrically conductive porous gas transport layer should cover at least 10 % of the cathode surface, preferably at least 70 % and even more preferably 95 %.

Oxygen-containing gas flows to the cathode side of the MEA through the electrically conductive porous gas transport layer, in a manner that it goes through the cathode gas diffusion layer in the through-plane direction and reaches the cathode catalyst layer. Water is forced to flow through the GDL on its in-plane direction. In this manner, the cathode has simultaneous access to oxygen containing gas, water, and electricity. Generated hydrogen peroxide is dissolved in the flowing water, and is pushed out of the cathode catalyst layer, which minimizes hydrogen peroxide decomposition and maximizes faradaic efficiency and throughput. The electrically conductive porous gas transport layer provides important advantages on cell assembly and repeatability over previous designs that relied on gas dispersers (for example patent WO2017157797A1), where typically a single gas disperser that is not assembled properly or is outside of the required tolerance could lead to cell failure. In addition, another advantage is that the electrically conductive porous gas transport layer serves the dual purpose of collecting current from the cathode electrode, as well as delivering the oxygen gas reactant to the cathode electrode, while gas dispersers would typically only disperse the gas and additional components would be required for current collection.

In some embodiments one or more gas diffusion layers are inserted between the cathode gas diffusion layer and the electrically conductive porous gas transport layer, to facilitate water or gas transport, or favor hydrophilicity or hydrophobicity. The first and last of the inserted gas diffusion layers should be in contact with the electrically conductive porous gas transport layer and cathode respectively. Preferably the gas diffusion layer adjacent to the electrically conductive porous gas transport layer is of hydrophobic nature. The gas diffusion layers could also be patterned with Teflon or other substances to have preferential areas of hydrophobicity. In addition, the gas diffusion layers could cover an area of at least 10 % of the cathode, preferably at least 70 % and even more preferably at least 95 %.

A cathode plate is placed on the side of the electrically conductive porous gas transport layer opposite of the MEA. It provides mechanical support and electrical contact to the electrically conductive porous gas transport layer and the membrane electrode assembly. The cathode plate is typically made of an electrically conductive material, such as aluminum, titanium, stainless steel or graphite. A combination of injection molded plastic and conductive material is also suitable for the cathode plate. The cathode plate may have a dedicated gas inlet, and gas is directed to an internal cavity. Similarly, the cathode plate also contains liquid inlets and outlets. Water enters in the inlet, and water together with generated hydrogen peroxide and any excess gas comes out of the outlet. Water entering through the inlet could contain dissolved air or oxygen, or nanobubbles, which could act as additional reactant for the cathode reaction. Importantly, and differently from other references, water should flow in-plane through the cathode gas diffusion layer to facilitate hydrogen peroxide removal from the cathode.

In some embodiments, the cathode plate and electrically conductive porous gas transport may have inlets and outlets in the through-plane direction (as shown in Figure 2).

In order to facilitate current collection from the electrically conductive porous gas transport layer, the cathode plate gas cavity could have electrically conductive pillars, a coarse porous material or a mesh that are in direct contact with the electrically conductive porous gas transport layer.

In another embodiment, gas and liquid inlets and outlets can be incorporated in respective gaskets without affecting the nature of the invention. Suitable gasket materials include PTFE, EPDM and other polymer-based substances, as well as ABS, PA and other plastics.

In some embodiments the electrically conductive porous gas transport layer could be physically attached to the cathode housing, by means for example of soldering or welding. In some other embodiments the electrically conductive porous gas transport layer and the cathode housing are simply pressed against each other during assembly. An O-ring, gasket or sealant products can be used between the two in order to prevent gas leakage.

An anode chamber, which collects electrical current from the MEA, and contains the inputs and outputs to the anode side of the MEA. The anode chamber should contain anode input and anode output. The anode input serves to introduce water inside the anode chamber, and the output directs excess water not consumed by the anode and oxygen gas generated during the electrochemical reaction outside of the housing. The anode chamber should also be in electrical contact with the anode side of the MEA. This can be facilitated by pillars or other structures that allow water flow through, while at the same time being in direct contact with the anode. In other embodiments, porous metals or mesh structures could also be used as a separate component.

The components of the cell are put together, and kept in place through bolts, clamps, or other tools.

In some embodiments the cathode and anode plates may be treated as a single piece, known as a bipolar plate.

Once the electrochemical cell is assembled, the required reactants and power are delivered to the electrochemical cell.

Following assembly of the electrochemical cell into the housing, oxygen-containing gas is introduced at the cathode with a flow between 0.01 to 100 mL/min/cm² of electrode area, to obtain a pressure between 0.01 and 10 bar. The source of oxygen-containing gas could be ambient air, a pressurized oxygen bottle or an oxygen concentrator. Water is introduced to the anode with a water flow between 0.01 to 50 ml/min/cm². Preferably water used is deionized, with a conductivity under 20 µS/cm, and even more preferably with a conductivity under 1 µS/cm. This flow can be continuous or pulsating so as to only refill the anode compartment periodically. Water is also introduced at the cathode chamber in a suitable flow. Voltage is applied between the cathode and anode electrodes, between 0.6 and 10 V per cell, preferably between 1.2 and 5 V and even more preferably between 1.2 and 3.5 V. Current from the cell ranges between 20 mA/cm² to 1500 mA/cm². This results in hydrogen peroxide being generated at the cathode. The generated concentration is between 200 mg/L to 200000 mg/L, preferably between 1000 to 30000 mg/L. The output concentration can be varied depending on the applied current and the water flow in the cathode chamber. It is also possible to combine one or more cells in series, in parallel or a combination of both to generate higher throughputs.

The generated hydrogen peroxide solution can be stored in a reservoir for subsequent use or be directly injected in a pipe. Examples of suitable uses are within wastewater treatment, irrigation water treatment or cooling tower water treatment, or other applications where hydrogen peroxide is used as an oxidant, biocide and / or oxygen source. Generated hydrogen peroxide can also be combined with UV light, Fenton-like agents (such as iron ions) or ozone to create OH radicals, which have a higher oxidation potential and are the basis for advanced oxidation processes. It can also be combined with acetic acid on-site to generate peracetic acid.

Several of the electrochemical cells in this configuration can be arranged in parallel or series, which would enable a higher overall throughput.

### Example 1:

To demonstrate this invention an electrolyzer was setup to produce hydrogen peroxide on the basis of the following half-cell reactions:

Anode: 2*H*₂*O* → *O*₂ + 4*H*⁺ + 4*e⁻*

Cathode: 2*O*₂ + 4*H*⁺ + 4*e⁻* → 2*H*₂*O*₂

It is also important to minimize hydrogen peroxide decomposition, which can take place chemically:

2*H*₂*O*₂ → 2*H*₂*O* + *O*₂

Or electrochemically:

*H*₂*O*₂ + 2*H*⁺ + 2*e⁻* → 2*H*₂*O*

Other proton sources could be used at the anode without affecting the nature of the invention; these include ethanol, methanol, hydrogen and others, which will be apparent to those versed in the art.

The anode was prepared by depositing Iridium oxide nanoparticles on a cation polymer exchange membrane. The thickness of the polymer exchange membrane was 135 µm but thicker or thinner membranes could be used without affecting the nature of the invention. Preferably the membrane is between 5 and 500 µm in thickness and more preferably between 20 and 200 µm. A suitable current collector was placed on the anode side of the membrane in direct contact with the iridium oxide nanoparticles. The material of the current collector is selected to withstand oxidizing conditions and is preferably made of Titanium and/or its oxides, tantalum and/or its oxides, gold, carbon, stainless steel or platinum among others. The current collector material may also be of an electrically conducting material, coated with Platinum, Iridium and its oxides, Titanium and its oxides or tantalum and its oxides. The purpose is to obtain suitable electrical contact to the anode catalyst, which could be facilitated by the application of pressure and/or temperature during the process. In this example, a Titanium felt was used as an anode current collector.

Cathodes were obtained by coating a gas diffusion layer with a suitable catalyst material. Gas diffusion layers could be hydrophilic or hydrophobic and contain coatings of PTFE or other substances in order to control the hydrophobicity. Coating was done by dispersing suitable catalyst nanoparticles in ethanol, water and ionomer to form a catalyst ink, which can then be sprayed or deposited by other means onto the gas diffusion layer. Suitable cathode catalysts should be selective towards oxygen reduction to hydrogen peroxide, and include Pt-Hg, Pd-Hg, Cu-Hg, Ag-Hg, Ag, Au, carbon, graphene, nitrogen doped carbon, Sulphur doped carbon, Cobalt porphyrins and phthalocyanines, transition metal sulfides and nitrides and any combinations thereof.

The anode current collector, anode, membrane and cathode were assembled and heat pressed for 5 minutes at 130 C under a pressure of 200 kg/cm². This resulted in a membrane electrode assembly, which forms a single mechanical entity.

Following this, the membrane electrode assembly was placed in a suitable cell housing, as shown in Figure 1. The cell housing consists of an anode chamber, where the anode side of the MEA is placed, an electrically conductive porous gas transport layer, where the cathode side of the MEA is placed, and a cathode housing that provides mechanical support for the electrically conductive porous gas transport layer. During assembly it was established to be very important that the electrically conductive porous gas transport layer is flat, and that it homogeneously contacts the cathode gas diffusion layer. This is very important as any deviations would facilitate that water escapes from the desired path in-plane of the cathode gas diffusion layer, and takes a path outside of it as it offers less resistance and pressure drop. This would result in a lower efficiency in the removal of hydrogen peroxide from the cathode catalyst layer, and overall lower performance of the electrochemical cell.

The cathode side of the MEA was fed with a gas flow of 22 ml/min/cm², normalized to electrode area, with a preferred range of 0.01 to 100 mL/min/cm². The pressure is set between 0.01 and 10 bar. The anode was fed water flow at 0.3 ml/min/cm², normalized to electrode area and can be varied in the range of 0.01 to 50 ml/min/cm². Water was also fed in between the cathode electrode and the ion exchange membrane in a suitable flow to produce a hydrogen peroxide concentration of 1000 to 3000 mg/L, and preferably concentration can be set between 200 mg/L to 50000 mg/L, even more preferably between 5000 to 30000 mg/L. The current density was set to 100 mA/cm² but can preferably be set in the range of 10 to 500 mA/cm². The potential corresponding to the 100 mA/cm² was measured to 1.9 V.

### Brief description of the drawings:

In the following, preferred embodiments of the invention are further explained with reference to drawings.
- Fig. 1:: Schematic view of an electrochemical cell design disclosed in this invention;
- Fig. 2:: Schematic view of an alternative configuration for the electrochemical cell design;
- Fig. 3:: Schematic representation of the electrically conductive porous gas transport;
- Fig. 4:: Exploded view of the electrochemical cell design.

In Fig. 1, reference sign 1 represents the electrochemical cell, 2 the cathode plate, 3 the electrically conductive porous gas transport layer, 4 the membrane electrode assembly, 5 the anode chamber, 6 the gas inlet, 7 the cathode water inlet, 8 the cathode water, oxygen and peroxide outlet, 9 the anode input and 10 the anode output.

Oxygen-containing gas is introduced through the gas inlet, and goes through the electrically conductive porous gas transport layer to be dispersed homogeneously over the cathode side of the membrane electrode assembly. Water is inserted through the cathode water inlet, and flows in the in-plane direction of the cathode gas diffusion layer. Excess gas, water and hydrogen peroxide exit through the cathode outlet. Water is also inserted through the anode input to enter the anode chamber, where it is oxidized to oxygen, and excess water exits through the anode output. A voltage difference is applied between the anode and cathode sides of the membrane electrode assembly.

Fig. 2 shows a schematic view of an alternative configuration for the electrochemical cell design disclosed in this invention. Reference sign 1 represents the electrochemical cell, 2 the cathode plate, 3 the electrically conductive porous gas transport layer, 4 the membrane electrode assembly, 5 the anode chamber, 6 the gas inlet, 9 the anode input and 10 the anode output.

Differently from figure 1, in this configuration the cathode water inlet 11 and the cathode outlet 12 are placed through the electrically conductive porous gas transport layer (indicated by the dotted lines). Oxygen-containing gas is introduced through the gas inlet, and is directed through dedicated openings in the electrically conductive porous gas transport layer to be dispersed homogeneously over the cathode side of the membrane electrode assembly. Water is inserted through the cathode water inlet, goes through dedicated paths through the cathode plate and the electrically conductive porous gas transport layer and flows in the in-plane direction of the cathode gas diffusion layer. Excess gas, water and hydrogen peroxide exit through the cathode outlet. Water is also inserted through the anode input to enter the anode chamber, where it is oxidized to oxygen, and excess water exits through the anode output. A voltage difference is applied between the anode and cathode sides of the membrane electrode assembly.

Fig. 3 is a schematic representation of the electrically conductive porous gas transport with the MEA components. Reference sign 3 represents the electrically conductive porous gas transport layer, 13 the cathode gas diffusion layer, 14 the cathode catalyst layer, 15 the polymer exchange membrane, 16 the anode catalyst layer and 17 the anode current collector. The electrically conductive porous gas transport layer delivers gas to the cathode gas diffusion layer, while at the same time serving as the cathode current collector. The cathode gas diffusion layer has a water flow in the in-plane direction, as indicated by the arrow, and gas bubbles from the electrically conductive porous gas transport layer navigate through the water to reach the cathode catalyst layer. The cathode catalyst layer reduces oxygen to hydrogen peroxide, which rapidly exits the catalyst layer and dissolves in the water flowing through the cathode gas diffusion layer. The anode catalyst layer oxidizes water into protons, which then cross the polymer exchange membrane to reach the cathode catalyst layer. The anode current collector provides electrical contact to the anode catalyst layer.

Fig. 4 is an exploded view of the electrochemical cell design disclosed in this invention. Reference sign 1 represents the electrochemical cell, 2 the cathode plate, 3 the electrically conductive porous gas transport layer, 4 the membrane electrode assembly, 5 the anode chamber, 18 the cathode end plate, 19 the cathode current collector, 20 the cathode plate, with an inserted mesh inside, 21 the anode gasket and 22 the anode end plate.

## Claims

1. Apparatus or device producing hydrogen peroxide by electrochemical oxygen reduction, comprised of one or more electrochemical cells (1), with each of the electrochemical cells comprising
- at least one cathode catalyst layer with suitable catalysts (14),
- at least one cathode gas diffusion layer (13)
- at least one ion exchange membrane (15),
- at least one anode catalyst layer with suitable catalysts (16),
- at least one anode current collector (17)
- at least one electrically conductive porous gas transport layer (3)
where the anode catalyst layer (16) is pressed against one side of the ion exchange membrane (15), and the other side of the ion exchange membrane (15) is pressed against the cathode catalyst layer (14) forming a single mechanical entity known as membrane electrode assembly (4), and where an electrically conductive porous gas transport layer (3) is placed in direct contact with the side of the cathode not in contact with the ion exchange membrane (15) allowing the flow of oxygen-containing gas to the cathode gas diffusion layer (13) and providing current collection, wherein the cathode gas diffusion layer (13) has water flowing in its in-plane direction.

2. The apparatus or device of claim 1 wherein water oxidation takes place at the anode, and oxygen reduction takes place at the cathode.

3. The apparatus or device of claim 1 wherein at least 10 % of the cathode surface not facing the ion exchange membrane is covered with the electrically conductive porous gas transport layer.

4. The apparatus or device of claim 1 wherein water is flowing through the cathode gas diffusion layer in its in-plane direction.

5. The apparatus or device of claim 1 wherein one or more gas diffusion layers are inserted between the electrically conductive porous gas transport layer and the cathode, in a manner that the first and last inserted gas diffusion layers are in direct contact with the electrically conductive porous gas transport layer and cathode respectively.

6. The apparatus or device of claim 1 wherein the electrically conductive porous gas transport layer has a porosity between 0.1 to 100 um.

7. The apparatus or device of claim 1 wherein the electrically conductive porous gas transport layer induces a pressure drop between gas cavity (x) and cathode gas diffusion layer (x) of at least 5 mbar.

8. The apparatus or device of claim 1 wherein the electrically conductive porous gas transport layer is made of porous transition or post-transition metal or carbon materials or a mixture thereof.

9. The apparatus or device of claim 1 wherein current density at the membrane electrode assembly is between 30 and 900 mA/cm2.

10. The apparatus or device of claim 1 wherein the applied cell voltage is between 1.4 and 2.8 V.

11. The apparatus or device of claim 1 wherein one or more gas diffusion layers are introduced between the at least one cathode with suitable catalysts (2) and the at least one electrically conductive porous gas transport layer (5).

12. The apparatus or device of claim 1 wherein the on-site generated hydrogen peroxide is combined with ultra-violet light or ozone in order to facilitate the formation of hydroxyl radicals.
